(19) Europäisches Patentamt / European Patent Office / Office européen des brevets

(11) **EP 1 487 752 B1**

(12) **FASCICULE DE BREVET EUROPEEN**

(45) Date de publication et mention
de la délivrance du brevet:
**05.12.2012 Bulletin 2012/49**

(51) Int Cl.:
***C03C 3/087*** *(2006.01)*      ***C03C 4/02*** *(2006.01)*
***C03C 4/08*** *(2006.01)*

(21) Numéro de dépôt: 03735781.1

(22) Date de dépôt: **19.03.2003**

(86) Numéro de dépôt international:
**PCT/FR2003/000868**

(87) Numéro de publication internationale:
**WO 2003/080527 (02.10.2003 Gazette 2003/40)**

(54) **COMPOSITION DE VERRE DESTINEE A LA FABRICATION DE VITRAGE**

GLASZUSAMMENSETZUNG ZUR HERSTELLUNG EINER VERGLASUNG

COMPOSITION OF GLASS FOR THE PRODUCTION OF GLAZING

(84) Etats contractants désignés:
**AT BE BG CH CY CZ DE DK EE ES FI FR GB GR HU IE IT LI LU MC NL PT RO SE SI SK TR**

(30) Priorité: **27.03.2002 FR 0203873**

(43) Date de publication de la demande:
**22.12.2004 Bulletin 2004/52**

(73) Titulaire: **SAINT-GOBAIN GLASS FRANCE**
**92400 Courbevoie (FR)**

(72) Inventeurs:
  • **TEYSSEDRE, Laurent**
  **F-75013 Paris (FR)**
  • **SACHOT, Dominique**
  **F-77330 Ozoire la Ferriere (FR)**

(74) Mandataire: **Jamet, Vincent**
**Saint-Gobain Recherche**
**39, quai Lucien Lefranc**
**B.P. 135**
**93303 Aubervilliers Cedex (FR)**

(56) Documents cités:
**EP-A- 0 565 882    EP-A- 0 653 386**
**EP-A- 1 000 910    WO-A-00/76928**

**Description**

L'invention concerne une composition de verre de type silico-sodo-calcique destinée à la réalisation de verres neutres à nuance bleue, grise ou bronze qui possèdent une transmission lumineuse élevée et une transmission énergétique modérée. Bien que l'invention ne soit pas limitée à une telle application, elle est plus particulièrement décrite en référence à des applications pour l'automobile, notamment pour former des pare-brise et vitrages latéraux situés à l'avant d'un véhicule.

Les vitrages destinés à l'industrie automobile sont soumis à des exigences de différents ordres. En matière de propriétés optiques, ces exigences sont régies par voie de réglementation comme dans le cas de la transmission lumineuse d'un pare-brise, ou relèvent du confort de l'usager, par exemple lorsqu'il s'agit de limiter la chaleur à l'intérieur de l'habitacle en ayant des verres présentant une transmission énergétique aussi faible que possible.

Outre les exigences relatives à la transmission lumineuse et à la transmission énergétique, les vitrages situés à l'avant des véhicules doivent répondre aux désirs esthétiques des constructeurs automobiles en ce qui concerne la couleur, en particulier relativement à la longueur d'onde dominante et à la pureté.

Pour obtenir un verre bleu, gris ou bronze, il est connu d'ajouter aux matières premières destinées à être fondues pour réaliser la matrice verrière des agents colorants tels que le fer, le sélénium, le nickel, le cobalt, le chrome, le manganèse ou les terres rares, par exemple le cérium ou l'erbium.

Il demeure cependant difficile d'obtenir des verres qui associent une couleur particulière en termes de domaine de longueur d'onde et de pureté d'excitation, et des caractéristiques spécifiques, par exemple des facteurs de transmission lumineuse et de transmission énergétique dans une plage de valeurs bien définie. Il est en effet reconnu que l'ajout ou la substitution d'un agent colorant par un autre et/ou le changement de la quantité ou de la proportion relative des agents colorants dans une composition modifie non seulement la couleur du verre, mais peut également affecter sa transmission lumineuse et ses qualités structurales. Par exemple, l'augmentation de la teneur en oxyde de fer dans une composition silico-sodo-calcique dans le but d'améliorer l'absorption des rayonnements infrarouge et ultraviolet donne un verre fortement coloré en vert, ce qui se traduit par une augmentation de la pureté d'excitation.

Dans le secteur automobile, la tendance actuelle est aux vitrages à teinte neutre, ayant une pureté d'excitation aussi faible que possible, de sorte qu'ils puissent s'intégrer harmonieusement à l'ensemble du véhicule.

On connaît déjà des verres gris neutre obtenus à partir de compositions renfermant de l'oxyde de fer, de l'oxyde de cobalt et du sélénium et/ou de l'oxyde de nickel.

WO-A-96/04212 décrit une composition de verre à teinte neutre pour l'automobile qui comprend 0,3 à 0,7 % de fer total ($Fe_2O_3$), 3 à 25 ppm de cobalt ($Co_3O_4$), 0,5 à 10 ppm de sélénium et éventuellement de l'oxyde de nickel et/ou de titane. Les verres obtenus possèdent une pureté d'excitation inférieure à 6 %.

Dans EP-A-0 653 386, il est proposé des compositions permettant d'obtenir des verres gris utilisables pour l'automobile. Celles-ci se caractérisent par le fait qu'elles renferment soit 0,3 à 0,7 % d'oxyde de fer, 3 à 50 ppm d'oxyde de cobalt et 1 à 15 ppm de sélénium, soit 0,15 à 0,6 % d'oxyde de fer, 15 à 55 ppm d'oxyde de cobalt et 25 à 350 ppm d'oxyde de nickel, et éventuellement jusqu'à 5 ppm de sélénium.

Dans EP-A-0 677 492, on décrit un verre gris-vert ayant une pureté inférieure à 1,6 % sous illuminant C. Le verre est obtenu à partir d'une composition contenant 0,45 à 0,95 % d'oxyde de fer, 8 à 30 ppm de cobalt et un ou plusieurs des composés suivants : sélénium (0-10 ppm), $MnO_2$ (0-0,5 %) et NiO (0-30 ppm).

FR-A-2 738 239 décrit une composition de verre gris clair à nuance variant entre le verdâtre et le bleuté, qui contient 0,25 à 0,60 % de fer, 10 à 40 ppm de cobalt et 5 à 30 ppm de sélénium. Les verres possèdent une pureté d'excitation des verres n'excédant pas 6 % et une sélectivité supérieure à 1,1.

On sait aussi grâce à WO-A-00/76928 que des verres gris neutre peuvent être obtenus à partir de compositions renfermant de l'oxyde de fer (0,3-0,7 %), du sélénium (1-15 ppm) et éventuellement de l'oxyde de cobalt (0-15 ppm). Les verres produits présentent un déplacement de la couleur standard (en anglais « standard color shift ») inférieur à 6. WO 03/004427 décrit des compositions de verre gris pour la fabrication de verres plats, comprenant 0,25-0,65% de fer total, moins de 20 ppm de CoO, 40-250 ppm NiO et 0-5 ppm de Se avec une pureté d'excitation de préférence inférieure à 5%. Ce document fait partie de l'art antérieur au titre de l'Art. 54(3) CBE.

Les constructeurs d'automobiles ont des exigences toujours plus grandes en matière de vitrages. Ils souhaitent ainsi avoir à disposition des verres colorés qui, en plus de leurs propriétés optiques et énergétiques, permettent de ne pas modifier la perception de la couleur qu'un observateur situé à l'extérieur du véhicule peut avoir des éléments intérieurs tels que le tissu des sièges ou le tableau de bord. La propriété d'un verre à ne pas altérer la vision est mesurée par l' « indice de rendu des couleurs » qui est défini dans la norme européenne EN 410:1998. Ainsi lorsque l'indice de rendu des couleurs est proche de 100, il n'y a pas de différence de coloration entre les éléments vus par l'observateur dans l'habitacle ou hors de celui-ci.

La présente invention a pour but de proposer une composition de verre de type silico-sodo-calcique qui présente une coloration très neutre à nuance bleutée, grise ou bronze, une transmission lumineuse globale sous illuminant A ($T_{LA}$) compatible avec une utilisation en tant que vitrage avant d'un véhicule automobile, en particulier, un pare-brise, et une transmission énergétique globale ($T_E$) satisfaisante, cette composition possédant en outre un indice de rendu des couleurs élevé.

Un autre but de l'invention est de proposer une composition de verre susceptible d'être nappée à la surface d'un bain de métal selon la technique du verre flotté, dans des conditions d'oxydo-réduction proches de celles habituellement mises en oeuvre pour un verre flotté standard et à un coût similaire.

Ces buts sont atteints selon l'invention grâce à une composition de verre de type silico-sodo-calcique selon les revendications 1 et 5.

Dans le contexte de la présente invention, la sélectivité SE est définie comme étant le rapport entre le facteur de transmission lumineuse sous illuminant A ($T_{LA}$) et le facteur de transmission énergétique (TE) pour une épaisseur de verre de 3,85 mm.

De même, le rédox est défini par le rapport entre la teneur en FeO et la teneur en fer total, exprimée sous la forme $Fe_2O_3$, les teneurs étant exprimées en pourcentages pondéraux.

Par la suite, on désigne par R1 le rapport :

$$(200 \times NiO) + (5000 \times Se) + (6 \times Fe_2O_3) / (875 \times CoO) + (24 \times FeO)$$

La composition de verre selon la présente invention possède une pureté d'excitation inférieure ou égale à 2 %, de préférence inférieure à 1 %.

De manière générale, la composition de verre est de couleur gris neutre et sa nuance est balancée par les teneurs respectives en agents colorants comme indiqué ci-dessus. Le réglage de la nuance, définie par sa longueur d'onde dominante ($\lambda d$), est rendu possible en maintenant les agents colorants dans les limites indiquées ci-dessus. Ainsi lorsque la valeur du rapport des agents colorants précités est :

- inférieure à 0,8, on obtient une nuance bleue ($\lambda d$ de l'ordre de 490 à 500 nm),
- comprise entre 0,8 et 1,25, le verre formé est gris sans nuance particulière,
- supérieure à 1,25, on obtient une nuance bronze ($\lambda d$ de l'ordre de 540 à 560 nm).

Il convient de souligner ici le rôle joué par le NiO qui permet de faire varier la nuance sur une large gamme, sans toutefois réduire de manière importante la transmission lumineuse comme peuvent le faire Se et CoO. En outre, la teneur en NiO mise en oeuvre reste faible ce qui permet de réduire le risque que le NiO se combine avec des composés soufrés tel que le sulfate utilisé comme agent d'affinage du verre, pour former billes de sulfure de nickel. La présence de ces billes au sein du verre donne des vitrages qui, après avoir subi l'étape de trempe, ont tendance à se briser lorsqu'ils sont exposés au soleil sur de longues durées.

Une première série de compositions préférées selon l'invention permet d'obtenir des verres gris neutre ayant une pureté inférieure à 1 % et un indice de rendu des couleurs au moins égal à 96. Ces compositions comprennent les agents colorants ci-après dans les limites pondérales suivantes :

| | |
|---|---|
| $Fe_2O_3$ (fer total) | 0,2 - 0,3 % |
| Se | 2 - 8 ppm |
| CoO | 0 - 20 ppm |
| NiO | 0 - 5 ppm |

et la composition présentant un rédox supérieur à 0,4, de préférence supérieur à 0,45.

Les compositions de verre particulièrement préférées sont dénuées de NiO et comprennent :

| | |
|---|---|
| $Fe_2O_3$ (fer total) | 0,2 - 0,25 % |
| Se | 4 - 7 ppm |
| CoO | 10 - 20 ppm |

Une deuxième série de compositions préférées selon l'invention permet d'obtenir des verres ayant une sélectivité supérieure à 1,3 et avantageusement supérieure à 1,35. De telles compositions permettent de former des vitrages automobiles qui satisfont les exigences de confort thermique des personnes se trouvant dans l'habitacle et de transmission lumineuse. Ces compositions comprennent les agents colorants ci-après dans les limites pondérales suivantes :

| | |
|---|---|
| $Fe_2O_3$ (fer total) | 0,35 - 0,45 % |
| Se | 2 - 8 ppm |

(suite)

| CoO | 0 - 10 ppm |
|---|---|
| NiO | 0 - 80 ppm |

et la composition présentant un rédox supérieur ou égal à 0,34.

Les compositions de verre particulièrement préférées comprennent :

| Fe$_2$O$_3$ (fer total) | 0,39 - 0,45 % |
|---|---|
| Se | 3 - 6 ppm |
| CoO | 0 - 6 ppm |
| NiO | 0 - 15 ppm |

La composition de verre selon l'invention permet de former des verres présentant un indice de rendu des couleurs élevé, au moins égal à 94, et le plus souvent supérieur à 96. Cet indice défini selon la norme EN410:1998 permet d'apprécier les variations de coloration au travers d'un vitrage du verre à tester d'échantillons témoins de couleur donnée éclairés par un illuminant de référence (D65). Les verres ayant un indice supérieur à 90 sont considérés comme ayant un très bon rendu de couleur.

Dans les verres selon l'invention, la silice est généralement maintenue dans des limites très étroites pour les raisons suivantes : au-dessus d'environ 75 %, la viscosité du verre et son aptitude à la dévitrification augmentent fortement ce qui rend plus difficile sa fusion et sa coulée sur un bain d'étain fondu, et au-dessous de 64 %, la résistance hydrolytique du verre décroît rapidement.

Cette diminution de la résistance hydrolytique du verre peut être compensée, au moins en partie, par l'introduction de Al$_2$O$_3$, mais cet oxyde contribue à augmenter sa viscosité et à diminuer la transmission dans le visible. De ce fait, son utilisation n'est envisagée qu'en quantité très limitée.

Les oxydes alcalins Na$_2$O et K$_2$O facilitent la fusion du verre. K$_2$O peut être utilisé jusqu'à 5 % environ car au-delà se pose le problème du coût élevé de la composition. La somme des teneurs en Na$_2$O et K$_2$O, exprimées en pourcentages pondéraux, est de préférence égale ou supérieure à 13 %.

Les oxydes alcalino-terreux jouent un rôle déterminant dans l'obtention des propriétés des verres selon l'invention.

S'agissant de l'oxyde MgO, selon un premier mode de réalisation de l'invention, sa teneur est avantageusement supérieure à 2 %, notamment par souci économique.

Selon un autre mode de réalisation, sa teneur est inférieure à 2 %. Il a en effet été mis en évidence que la limitation de la teneur en MgO à 2 % a pour effet de provoquer le déplacement du maximum de la bande d'absorption de FeO vers les grandes longueurs d'onde, permettant ainsi d'augmenter la capacité d'absorption dans l'infrarouge sans nuire à la transmission dans le visible. La suppression totale de MgO, qui joue un rôle important sur la viscosité peut être compensée, au moins en partie, par une augmentation de la teneur en Na$_2$O et/ou SiO$_2$.

BaO permet d'augmenter la transmission lumineuse et il peut être ajouté dans la composition selon l'invention dans une teneur inférieure à 4 %. En effet, BaO a une influence beaucoup plus faible que MgO et CaO sur la viscosité du verre. Dans le cadre de l'invention, l'augmentation de BaO se fait essentiellement au détriment des oxydes alcalins, de MgO et surtout de CaO. Toute augmentation importante de BaO contribue donc à augmenter la viscosité du verre, notamment aux basses températures. De surcroît, l'introduction d'un pourcentage élevé de BaO majore sensiblement le coût de la composition. De manière préférée, les verres selon l'invention sont exempts de BaO. Lorsqu'ils en contiennent, la teneur en BaO est de préférence, comprise entre 0,5 et 3,5 % en poids.

Outre le respect des limites définies précédemment pour la variation de la teneur de chaque oxyde alcalino-terreux, il est préférable pour obtenir les propriétés de transmission recherchées, de limiter la somme des pourcentages pondéraux de MgO, CaO et BaO à une valeur égale ou inférieure à 14 %.

La composition de verre peut comprendre en outre au moins un agent absorbant optique tel que CeO$_2$, TiO$_2$, V$_2$O$_5$, WO$_3$, La$_2$O$_3$, ... La teneur totale de cet (ces) agent(s) est généralement maintenue inférieure à 1 % en poids de la composition, et de préférence inférieure à 0,5 %.

Les verres obtenus à partir des compositions selon l'invention peuvent également contenir jusqu'à 1 % d'autres constituants apportés par les impuretés des matières premières vitrifiables et/ou par l'introduction de calcin recyclé dans le mélange vitrifiable et/ou par l'utilisation d'agent d'affinage (SO$_3$, Cl, Sb$_2$O$_3$, As$_2$O$_3$).

Les verres obtenus à partir des compositions conformes à l'invention peuvent être élaborés dans des conditions qui permettent d'atteindre le degré d'oxydo-réduction (rédox) désiré qui demeure toutefois inférieur à 0,5. Ces verres peuvent ainsi être élaborés en présence d'agents d'affinage connus tels que les sulfates. Pour faciliter la fusion, et notamment rendre celle-ci mécaniquement intéressante, la matrice verrière présente avantageusement une température correspondant à une viscosité η telle que logη = 2 qui est inférieure à 1500°C. De préférence encore, notamment lorsqu'on souhaite obtenir le verre sous la forme d'un ruban de verre selon la technique du verre flotté ("float"), la matrice présente une température correspondant à la viscosité η, exprimée en poise, telle que logη = 3,5, (notée T(logη = 3,5)) et une température au liquidus (notée $T_{liq}$) satisfaisant la relation :

$$T(log\eta = 3,5) - T_{liq} > 20°C,$$

et de préférence la relation :

$$T(log\eta = 3,5) - T_{liq} > 50°C,$$

Les exemples de compositions de verre données ci-après permettent de mieux apprécier les avantages de la présente invention.

Dans ces exemples, on indique les valeurs des propriétés suivantes mesurées sous une épaisseur de 3,85 mm :

➢ le facteur de transmission lumineuse globale sous illuminant A ($T_{LA}$)
➢ le facteur de transmission énergétique globale ($T_E$) intégrée entre 295 et 2100 nm selon la norme ISO 9050 (Parry Moon Masse d'air 2),
➢ la sélectivité (SE), définie comme étant le rapport ($T_{LA}/T_E$),
➢ la longueur d'onde dominante ($\lambda d$) sous illuminant D65,
➢ la pureté d'excitation ($P_{D65}$) sous illuminant D65,
➢ l'indice général de rendu des couleurs ($R_a$), tel que défini dans la norme EN410:1998 (Verre dans la construction, détermination des caractéristiques lumineuses et solaires des vitrages).

Les calculs de la transmission lumineuse ($T_{LA}$), de la longueur d'onde dominante ($\lambda d$) et de la pureté (P) sont effectués en prenant l'observateur de référence colorimétrique CIE 1931 (Commission Internationale de l'Eclairage 1931).

Chacune des compositions figurant dans le tableau a été réalisée à partir de la matrice verrière suivante, dont les teneurs sont exprimées en pourcentages pondéraux, celle-ci étant corrigée au niveau de la silice pour s'adapter à la teneur totale en agents colorants ajoutés :

| | |
|---|---|
| $SiO_2$ | 71,00 % |
| $Al_2O_3$ | 0,70 % |
| CaO | 8,90 % |
| MgO | 3,80 % |
| $Na_2O$ | 14,10 % |
| $K_2O$ | 0,10 % |

Les températures T(logη=2) et T(logη=3,5) correspondant respectivement aux viscosités, exprimées en poise, telles que logη = 2 et logη = 3,5 ainsi que la température de liquidus $T_{liq}$ sont identiques pour tous les verres donnés (ceux-ci étant réalisés à partir de la même matrice verrière) et sont les suivantes :

| | |
|---|---|
| T(logη=2) | 1410°C |
| T(logη=3,5) | 1100°C |
| $T_{liq}$ | 1060°C |

Les compositions de verre figurant dans les exemples 1 à 40 sont conformes à l'invention.

Les compositions des exemples 41 à 44 sont données à titre d'exemples comparatifs. Les exemples 41 à 43 définissent des compositions renfermant respectivement une quantité importante de CoO, NiO et Se, et donc qui présentent un rapport R1 plus faible (exemple 41) ou plus élevé (exemples 42 et 43) que les compositions selon l'invention. Dans l'exemple 44, la composition est élaborée dans des conditions relativement réductrices (faible valeur de rédox).

Les exemples 1 à 40 selon l'invention montrent que l'utilisation des agents colorants oxydes de fer (sous forme $Fe_2O_3$ et FeO), CoO, NiO et Se dans des proportions satisfaisant le rapport R1 permet d'obtenir des verres des verres très neutres (pureté ≤ 2 %) ayant un indice de rendu des couleurs élevé (≥ 94), une sélectivité importante (≥ 1,25) et satisfaisant les contraintes optiques. Les exemples montrent également l'influence très forte que peuvent avoir de faibles variations de teneurs en cobalt, nickel et sélénium, ce qui permet de régler très finement la longueur d'onde dominante du verre et d'obtenir la nuance souhaitée, qui peut aller du bleu au bronze en passant par les nuances grises.

Les exemples 5, 16, 18, 21 et 34 à 37 appartiennent à la première série de compositions telle que définie plus haut qui permettent d'obtenir des verres gris très neutres (pureté ≤ 1 %) ayant un indice de rendu de couleur au moins égal à 96.

Les compositions données dans les exemples 1, 3, 4, 6, 8 à 12, 15, 20, 22, 26, 28 et 31 à 32 sont représentatives de la deuxième série précitée permettant de former des verres à sélectivité élevée (SE ≥ 1,35).

Les verres obtenus à partir des compositions selon l'invention sont compatibles avec les techniques habituelles de fabrication du verre plat. L'épaisseur du ruban de verre obtenu par nappage du verre en fusion sur un bain d'étain peut atteindre 20 mm et, en général, elle varie entre 0,8 et 10 mm.

Le vitrage obtenu par la découpe du ruban de verre peut subir ultérieurement une opération de bombage et/ou d'émaillage, notamment lorsqu'il s'agit d'un vitrage automobile.

Pour réaliser des pare-brise ou des vitrages latéraux, le vitrage est initialement découpé dans un ruban de verre dont l'épaisseur varie généralement entre 3 et 5 millimètres. Sous ces épaisseurs, le verre assure un bon confort thermique. Les pare-brise ou les vitrages latéraux en question peuvent être feuilletés auquel cas ils sont constitués de plusieurs feuilles de verre dont une au moins est obtenue à partir de la composition selon l'invention. De préférence, ces vitrages comprennent au moins une feuille de verre présentant une transmission lumineuse globale sous illuminant A ($T_{LA}$) au moins égale à 70 % sous une épaisseur de 3,85 mm.

Les vitrages entrant dans le cadre de la présente invention peuvent être soumis au préalable à des traitements de surface ou être associés, par exemple, à un revêtement organique tel qu'un film à base de polyuréthanes à propriétés anti-lacérantes ou à un film assurant l'étanchéité en cas de bris.

Ces vitrages peuvent également être revêtus d'au moins une couche d'oxyde métallique obtenue par dépôt chimique à haute température selon les techniques de pyrolyse ou de dépôt chimique en phase vapeur (CVD) ou par dépôt sous vide.

EP 1 487 752 B1

**TABLEAU 1**

| | 1 | 2 | 3 | 4 | 5 | 6 | 7 | 8 | 9 | 10 | 11 | 12 | 13 | 14 | 15 |
|---|---|---|---|---|---|---|---|---|---|---|---|---|---|---|---|
| $Fe_2O_3$ (%) | 0.4 | 0.24 | 0.4 | 0.3 | 0.25 | 0.4 | 0.25 | 0.4 | 0.4 | 0.4 | 0.4 | 0.4 | 0.25 | 0.25 | 0.4 |
| Rédox | 0.35 | 0.50 | 0.48 | 0.47 | 0.48 | 0.35 | 0.48 | 0.35 | 0.36 | 0.35 | 0.40 | 0.35 | 0.44 | 0.48 | 0.35 |
| CoO (ppm) | 5 | 15 | 0 | 5 | 10 | 5 | 5 | 0 | 5 | 0 | 0 | 5 | 15 | 5 | 10 |
| NiO (ppm) | 5 | 0 | 0 | 5 | 0 | 0 | 0 | 10 | 5 | 35 | 20 | 10 | 75 | 60 | 0 |
| Se (ppm) | 4.6 | 5.9 | 8 | 5.6 | 5.6 | 4.6 | 3.8 | 5.1 | 5.8 | 2.1 | 5.6 | 4.6 | 2.6 | 4.6 | 4.6 |
| $Cr_2O_3$ (PPm) | | | | | | | | | | | | | | | |
| R1 | 1.02 | 0.86 | 1.13 | 0.99 | 0.93 | 0.99 | 0.78 | 1.26 | 1.13 | 0.96 | 1.18 | 1.04 | 0.90 | 1.27 | 0.89 |
| $T_{LA}$(%) | 72.4 | 71.2 | 67.5 | 71.7 | 72.8 | 72.6 | 76.26 | 72.9 | 70.7 | 75.4 | 70.9 | 72.1 | 72.5 | 72 | 71.3 |
| $T_E$ (%) | 52.9 | 55.3 | 45.2 | 52.8 | 55.8 | 53.0 | 57.5 | 52.9 | 51.4 | 54.27 | 49.7 | 52.8 | 57.17 | 55.4 | 52.5 |
| SE | 1.369 | 1.289 | 1.492 | 1.358 | 1.304 | 1.369 | 1.326 | 1.378 | 1.375 | 1.389 | 1.427 | 1.366 | 1.267 | 1.300 | 1.356 |
| $P_{D65}$(%) | 1.36 | 0.89 | 1.71 | 1.16 | 0.96 | 1.44 | 1.19 | 1.94 | 1.40 | 1.93 | 1.73 | 1.31 | 1.21 | 1.98 | 1.95 |
| $\lambda d$ (nm) | 508 | 508 | 533 | 510 | 528 | 506 | 503 | 542 | 528 | 502 | 534 | 500 | 507 | 547 | 499 |
| Ra | 94.59 | 95.87 | 94.26 | 95.12 | 96.16 | 94.52 | 95.48 | 95.39 | 95.11 | 94 | 94.71 | 94.6 | 95.25 | 96.15 | 94.03 |

**TABLEAU 2**

| | 16 | 17 | 18 | 19 * | 20 | 21 | 22 | 23 * | 24 | 25 * | 26 | 27 * | 28 | 29 * | 30 |
|---|---|---|---|---|---|---|---|---|---|---|---|---|---|---|---|
| $Fe_2O_3$ (%) | 0.25 | 0.25 | 0.22 | 0.3 | 0.4 | 0.22 | 0.45 | 0.28 | 0.41 | 0.26 | 0.41 | 0.28 | 0.4 | 0.3 | 0.25 |
| Rédox | 0.44 | 0.48 | 0.50 | 0.37 | 0.35 | 0.48 | 0.36 | 0.36 | 0.37 | 0.38 | 0.39 | 0.39 | 0.35 | 0.35 | 0.44 |
| CoO (ppm) | 0 | 14 | 16 | 12 | 10 | 11 | 5 | 0 | 20 | 0 | 9 | 6 | 0 | 5 | 9 |
| NiO (ppm) | 0 | 2 | 5 | 2 | 5 | 5 | 36 | 2 | 3 | 7 | 5 | 2 | 65 | 5 | 5 |
| Se (ppm) | 3.0 | 5.9 | 6 | 3.6 | 5.7 | 5 | 5.7 | 4.3 | 6.8 | 2.9 | 6.6 | 3 | 2 | 3.2 | 6.6 |
| $Cr_2O_3$ (PPm) | 0 | 0 | 0 | 0 | 0 | 0 | 0 | 0 | 0 | 0 | 0 | 0 | 0 | 100 | 0 |
| R1 | 0.86 | 0.90 | 0.91 | 0.79 | 1.04 | 0.92 | 1.22 | 1.34 | 0.92 | 1.04 | 1.04 | 0.79 | 1.12 | 0.95 | 1.22 |
| $T_{LA}$(%) | 79.2 | 71.4 | 71.29 | 73.9 | 69.84 | 74.0 | 68.7 | 77.02 | 65.8 | 78.6 | 68.05 | 76.4 | 74.25 | 74.39 | 71.4 |
| $T_E$(%) | 60.2 | 55.4 | 56.69 | 58.07 | 51.73 | 58.64 | 48.6 | 60.55 | 48.9 | 61.5 | 48.6 | 59.2 | 53.62 | 58.29 | 56.6 |
| SE | 1.316 | 1.289 | 1.258 | 1.273 | 1.350 | 1.262 | 1.414 | 1.272 | 1.346 | 1.278 | 1.400 | 1.291 | 1.385 | 1.276 | 1.261 |
| $P_{D65}$(%) | 0.92 | 0.82 | 0.79 | 1.96 | 1.23 | 0.91 | 1.95 | 1.97 | 1.87 | 0.98 | 1.3 | 1.86 | 1.52 | 1.97 | 1.92 |
| $\lambda d$ (nm) | 517 | 518 | 524 | 495 | 512 | 530 | 537 | 552 | 499 | 515 | 512 | 497 | 513 | 530 | 554 |
| Ra | 96.03 | 96.06 | 96.45 | 94.8 | 94.82 | 96.58 | 94.55 | 97.04 | 94.03 | 96.1 | 94.28 | 95.01 | 94.12 | 94.02 | 97.01 |

* exemples en dehors de l'invention.

**TABLEAU 3**

| | 31 | 32 | 33 | 34 | 35 | 36 | 37 | 38 | 39 | 40 | 41 | 42 | 43 | 44 |
|---|---|---|---|---|---|---|---|---|---|---|---|---|---|---|
| $Fe_2O_3$ (%) | 0.4 | 0.42 | 0.25 | 0.24 | 0.24 | 0.24 | 0.42 | 0.4 | 0.35 | 0.38 | 0.4 | 0.4 | 0.4 | 0.4 |
| Rédox | 0.35 | 0.38 | 0.48 | 0.50 | 0.47 | 0.45 | 0.31 | 0.30 | 0.31 | 0.32 | 0.35 | 0.35 | 0.35 | 0.25 |
| CoO (ppm) | 0 | 0 | 0 | 15 | 20 | 10 | 9 | 9 | 0 | 10 | 25 | 5 | 15 | 15 |
| NiO (ppm) | 10 | 10 | 25 | 11 | 3 | 3 | 5 | 7 | 0 | 45 | 0 | 100 | 35 | 0 |
| Se (ppm) | 4 | 5.1 | 3.6 | 5.9 | 6.4 | 4.4 | 5 | 4.5 | 3 | 3.6 | 4.6 | 5 | 9 | 5 |
| $Cr_2O_3$ (ppm) | 0 | 0 | 0 | 0 | 0 | 0 | 0 | 0 | 0 | 0 | 0 | 0 | 0 | 0 |
| R1 | 1.09 | 1.09 | 1.04 | 0.91 | 0.89 | 0.86 | 1.09 | 1.09 | 1.09 | 1.11 | 0.68 | 1.57 | 1.43 | 1.14 |
| $T_{LA}$ (%) | 74.16 | 71.72 | 75.92 | 70.79 | 69.6 | 74.79 | 71.3 | 72.4 | 77.7 | 71.8 | 67.5 | 68.2 | 64.1 | 71.6 |
| $T_E$(%) | 53.6 | 50.14 | 57.35 | 55 | 55.61 | 58.56 | 53.6 | 55.5 | 59.4 | 55.2 | 51.2 | 50.5 | 48.7 | 58 |
| SE | 1.384 | 1.430 | 1.324 | 1.287 | 1.252 | 1.277 | 1.331 | 1.306 | 1.309 | 1.301 | 1.318 | 1.351 | 1.31 | 1.23 |
| $P_{D65}$ (%) | 1.29 | 1.38 | 1.08 | 0.83 | 0.74 | 0.86 | 1.2 | 1.15 | 1.11 | 1.25 | 3.92 | 3.99 | 3.92 | 1.19 |
| $\lambda d$ (nm) | 516 | 518 | 515 | 517 | 516 | 511 | 517 | 517 | 516 | 517 | 490 | 558 | 562 | 530 |
| Ra | 94.72 | 94.3 | 95.59 | 96 | 96.29 | 96.13 | 95.09 | 95.35 | 95.65 | 95.09 | 92.54 | 95.82 | 96.43 | 96.22 |

**Revendications**

1. Composition de verre de type silico-sodo-calcique destinée notamment à la réalisation de vitrage, comprenant les constituants ci-après dans les limites pondérales suivantes :

| | |
|---|---|
| $SiO_2$ | 64 - 75 % |
| $Al_2O_3$ | 0 - 5 % |
| $B_2O_3$ | 0 - 5 % |
| CaO | 5 - 15 % |
| MgO | 0 - 5 % |
| $Na_2O$ | 10 - 18 % |
| $K_2O$ | 0 - 5 % |

et les agents colorants ci-après dans les limites pondérales suivantes :

| | |
|---|---|
| $Fe_2O_3$ (fer total) | 0,2- 0,3% |
| Se | 2 - 8 ppm |
| CoO | 0 - 20 ppm |
| NiO | 0 - 5 ppm |

lesdits agents satisfaisant la relation suivante :

$$0,7 < (200 \times NiO) + (5000 \times Se) + (6 \times Fe^{3+}) / (875 \times CoO) + (24 \times Fe^{2+}) < 1,6$$

dans laquelle les teneurs en NiO, Se, $Fe^{3+}$, CoO et $Fe^{2+}$ sont exprimées en ppm, $Fe^{3+}$ étant la teneur en fer ferrique exprimée sous la forme de $Fe_2O_3$ et $Fe^{2+}$ étant la teneur en fer ferreux exprimée sous la forme de FeO, et la composition présentant un rédox supérieur à 0,4 et inférieur ou égal à 0,5, une transmission lumineuse globale sous illuminant A ($T_{LA)}$ supérieure à 65 %, une sélectivité (SE) supérieure à 1,25, mesurées pour une épaisseur de 3,85 mm *caractérisée en ce qu'*elle présente une pureté d'excitation inférieure ou égale à 2 %.

2. Composition selon la revendication 1, *caractérisée en ce qu'*elle présente un rédox supérieur à 0,45.

3. Composition selon la revendication 1 ou 2, *caractérisée en ce qu'elle* présente une pureté d'excitation inférieure à 1 %.

4. Composition de verre selon l'une des revendications 1 à 3, *caractérisée en ce qu'*elle est dénuée de NiO et comprend

| | |
|---|---|
| $Fe_2O_3$ (fer total) | 0,2 - 0,25 % |
| Se | 4 - 7 ppm |
| CoO | 10 - 20 ppm |

5. Composition de verre de type silico-sodo-calcique destinée notamment à la réalisation de vitrage, comprenant les constituants ci-après dans les limites pondérales suivantes :

| | |
|---|---|
| $SiO_2$ | 64 - 75 % |
| $Al_2O_3$ | 0 - 5 % |
| $B_2O_3$ | 0 - 5 % |
| CaO | 5 - 15 % |
| MgO | 0 - 5 % |
| $Na_2O$ | 10 - 18 % |
| $K_2O$ | 0 - 5 % |

et les agents colorants ci-après dans les limites pondérales suivantes :

| | |
|---|---|
| $Fe_2O_3$ (fer total) | 0,35 - 0,45 % |
| Se | 2 - 8 ppm |
| CoO | 0 - 10 ppm |
| NiO | 0 - 80 ppm |

lesdits agents satisfaisant la relation suivante :

$$0,7 < (200 \times NiO) + (5000 \times Se) + (6 \times Fe^{3+}) / (875 \times CoO) + (24 \times Fe^{2+}) < 1,6$$

dans laquelle les teneurs en NiO, Se, $Fe^{3+}$, CoO et $Fe^{2+}$ sont exprimées en ppm, $Fe^{3+}$ étant la teneur en fer ferrique exprimée sous la forme de $Fe_2O_3$ et $Fe^{2+}$ étant la teneur en fer ferreux exprimée sous la forme de FeO,
et la composition présentant un rédox supérieur ou égal à 0,34 et inférieur ou égal à 0,5, une transmission lumineuse globale sous illuminant A ($T_{LA}$) supérieure à 65 %, une sélectivité (SE) supérieure à 1,25, mesurées pour une épaisseur de 3,85 mm *caractérisée en ce qu'*elle présente une pureté d'excitation inférieure ou égale à 2 %,
à l'exception de la composition de verre qui comprend la matrice verrière suivante, dont les teneurs sont exprimées en pourcentages pondéraux :

| | |
|---|---|
| $SiO_2$ | 71,00 % |
| $Al_2O_3$ | 0,70 % |
| CaO | 8,90 % |
| MgO | 3,80 % |
| $Na_2O$ | 14,10 % |
| $K_2O$ | 0,10 % |

et les agents colorants ci-après :

| | |
|---|---|
| $Fe_2O_3$ (fer total) | 0,45 % |
| FeO | 0,16 % |
| CoO | 10 ppm |
| NiO | 50 ppm |
| Se | 5 ppm |

ladite composition exceptée ayant une teneur en silice $SiO_2$ corrigée pour s'adapter à la teneur totale en agents colorants ajoutés, des températures $T(\log\eta=2)$ et $T(\log\eta=3,5)$ correspondant respectivement aux viscosités, exprimées en poise, telles que $\log\eta = 2$ et $\log\eta = 3,5$ ainsi que la température de liquidus $T_{liq}$ suivantes :

| | |
|---|---|
| $T(\log\eta=2)$ | 1410°C |
| $T(\log\eta=3,5)$ | 1100°C |
| $T_{liq}$ | 1060°C |

et ladite composition exceptée présentant en outre un facteur de transmission lumineuse globale sous illuminant A ($T_{LA}$) entre 380 et 780 nm égal à 69,0 %, un facteur de transmission énergétique globale ($T_E$) intégrée entre 295 et 2500 nm selon la norme ISO 9050 (Parry Moon Masse d'air 2) égal à 49,2 %, un facteur de transmission du rayonnement solaire ultraviolet ($T_{UV}$) calculé selon la norme ISO 9050 égal à 30,1 %, une longueur d'onde dominante ($\lambda d$) sous illuminant D65 égale à 517 nm et une pureté d'excitation ($P_{D65}$) sous illuminant D65 égale à 1,2 %, mesurés pour une épaisseur de 3,85 mm .

**6.** Composition selon la revendication 1 ou 5, *caractérisée en ce qu'* elle présente une sélectivité supérieure à 1,3.

**7.** Composition selon la revendication 5 ou 6, *caractérisée en ce qu'* elle comprend :

| | |
|---|---|
| $Fe_2O_3$ (fer total) | 0,39 - 0,45 % |

(suite)

| | |
|---|---|
| Se | 3 - 6 ppm |
| CoO | 0 - 6 ppm |
| NiO | 0 - 15 ppm |

8. Composition selon la revendication 1 ou 5, *caractérisée en ce qu'*elle présente un indice de rendu des couleurs (Ra), au moins égal à 94, et de préférence supérieur à 96.

9. Composition selon l'une des revendications 1 à 8, *caractérisée en ce qu'*elle comprend en outre au moins un agent absorbant optique choisi parmi $CeO_2$ $TiO_2$, $V_2O_5$, $WO_3$, $La_2O_3$.

10. Composition selon la revendication 9, *caractérisée en ce que* la teneur totale en agent(s) est inférieure à 1 % en poids.

11. Vitrage, *caractérisé en ce qu'*il comprend au moins une feuille de verre dont la composition chimique est définie par l'une quelconque des revendications 1 à 10.

12. Vitrage selon la revendication 11, *caractérisé en ce que* la feuille présente une épaisseur variant entre 0,8 et 10 mm.

13. Vitrage selon la revendication 12; *caractérisé en ce que* la feuille présente une transmission lumineuse globale sous illuminant A ($T_{LA}$) au moins égale à 70 % sous une épaisseur de 3,85 mm.

**Claims**

1. A glass composition of the soda-lime-silicate type, intended especially for the production of windows, comprising the constituents below within the following limits by weight:

| | |
|---|---|
| $SiO_2$ | 64 - 75% |
| $Al_2O_3$ | 0 - 5% |
| $B_2O_3$ | 0 - 5% |
| CaO | 5 - 15% |
| MgO | 0 - 5% |
| $Na_2O$ | 10 - 18% |
| $K_2O$ | 0 - 5% |

and the coloring agents below within the following limits by weight:

| | |
|---|---|
| $Fe_2O_3$ (total iron) | 0.2 - 0.3% |
| Se | 2 - 8 ppm |
| CoO | 0 - 20 ppm |
| NiO | 0 - 5 ppm |

said agents satisfying the following relationship:

$$0.7 < (200 \times NiO) + (5000 \times Se) + (6 \times Fe^{3+}) / (875 \times CoO) + (24 \times Fe^{2+}) < 1.6$$

in which the NiO, Se, $Fe^{3+}$, CoO and $Fe^{2+}$ contents are expressed in ppm, $Fe^{3+}$ being the content of ferric iron expressed in the form of $Fe_2O_3$ and $Fe^{2+}$ being the content of ferrous iron expressed in the form of FeO, and the composition having a redox varying from 0.4 to 0.5, an overall light transmission under illuminant A ($T_{LA}$) greater than 65% and a selectivity (SE) of greater than 1.25, these being measured for a thickness of 3.85 mm, **characterized in that** it has an excitation purity of less than or equal to 2%.

2. The composition as claimed in claim 1, **characterized in that** it has a redox greater than 0.45.

3. The composition as claimed in claims 1 or 2, **characterized in that** it has an excitation purity less than 1 %.

4. The glass composition as claimed in one of claims 1 to 3, **characterized in that** it is devoid of NiO and comprises:

| | |
|---|---|
| $Fe_2O_3$ (total iron) | 0.2 - 0.25% |
| Se | 4 - 7 ppm |
| CoO | 10 - 20 ppm. |

5. A glass composition of the soda-lime-silicate type, intended especially for the production of windows, comprising the constituents below within the following limits by weight:

| | |
|---|---|
| $SiO_2$ | 64 - 75% |
| $Al_2O_3$ | 0 - 5% |
| $B_2O_3$ | 0 - 5% |
| CaO | 5 - 15% |
| MgO | 0 - 5% |
| $Na_2O$ | 10 - 18% |
| $K_2O$ | 0 - 5% |

and the coloring agents below within the following limits by weight:

| | |
|---|---|
| $Fe_2O_3$ (total iron) | 0.35 - 0.45% |
| Se | 2 - 8 ppm |
| CoO | 0 - 10 ppm |
| NiO | 0 - 80 ppm |

said agents satisfying the following relationship:

$$0.7 < (200 \times NiO) + (5000 \times Se) + (6 \times Fe^{3+}) / (875 \times CoO) + (24 \times Fe^{2+}) < 1.6$$

in which the NiO, Se, $Fe^{3+}$, CoO and $Fe^{2+}$ contents are expressed in ppm, $Fe^{3+}$ being the content of ferric iron expressed in the form of $Fe_2O_3$ and $Fe^{2+}$ being the content of ferrous iron expressed in the form of FeO, and the composition having a redox greater or equal to 0,34 and less or equel to 0,5, an overall light transmission under illuminant A ($T_{LA}$) greater than 65% and a selectivity (SE) of greater than 1.25, these being measured for a thickness of 3.85 mm, **characterized in that** it has an excitation purity of less than or equal to 2% except for the glass composition that comprises the following glass matrix whose contents are expressed in weight percent :

| | |
|---|---|
| $SiO_2$ | 71,00% |
| $Al_2O_3$ | 0,70% |
| CaO | 8,90% |
| MgO | 3,80% |
| $Na_2O$ | 14,10% |
| $K_2O$ | 0,10% |

and the coloring agents below within the following limits by weight:

| | |
|---|---|
| $Fe_2O_3$ (total iron) | 0.45% |
| FeO | 0,16% |
| CoO | 10 ppm |
| NiO | 50 ppm |
| Se | 5 ppm |

said excluded composition having a corrected silica $SiO_2$ content silica in order to be adjusted to the total content of added coloring agents , temperatures $T_{log\eta=2}$ and $T_{log\eta}=3.5$, corresponding to the viscosities, expressed in poise, such that $log\eta = 2$ and $log\eta = 3.5$ respectively, together with the following liquidus temperature $T_{liq}$

| | |
|---|---|
| $T_{log\eta}=2$ | 1410°C |
| $T_{log\eta}=3.5$ | 1100°C |
| $T_{liq}$ | 1060°C |

and said excluded composition having furthermore an overall light transmission factor under illuminant A ($T_{LA}$) between 380 and 780 nm equal to 69,0%, an overall energy transmission factor ($T_E$) integrated between 295 and 2500 nm according to the ISO 9050 standard (Parry Moon, air mass 2)equal to 49,2%, an ultraviolet solar radiation transmission factor ($T_{UV}$) calculated according to the ISO 9050 standard equal to 30,1%, a dominant wavelength ($\lambda_d$) under illuminant $D_{65}$ equal to 517 nm and an excitation purity ($P_{D65}$) under illuminant $D_{65}$ equal to 1,2%, measured for a thickness of 3,85 nm.

**6.** The composition as claimed in claim 1 or 5, **characterized in that** it has a selectivity of greater than 1.3.

**7.** The composition as claimed in claim 5 or 6, **characterized in that** it comprises:

| | |
|---|---|
| $Fe_2O_3$ (total iron) | 0.39 - 0.45% |
| Se | 3 - 6 ppm |
| CoO | 0 - 6 ppm |
| NiO | 0 - 15 ppm. |

**8.** The composition as claimed in claim 1 or 5, **characterized in that** it has a color rendering index ($R_a$) of at least 94 and preferably greater than 96.

**9.** The composition as claimed in one of claims 1 to 8, **characterized in that** it furthermore includes at least one optical absorption agent chosen from $CeO_2$, $TiO_2$, $V_2O_5$ $WO_3$ and $La_2O_3$.

**10.** The composition as claimed in claim 9, **characterized in that** the total content of said agent(s) is less than 1 % by weight.

**11.** A window, **characterized in that** it comprises at least one glass sheet whose chemical composition is defined by any one of claims 1 to 10.

**12.** The window as claimed in claim 11, **characterized in that** the sheet has a thickness that can vary between 0.8 and 10 mm.

**13.** The window as claimed in claim 12, **characterized in that** the sheet has an overall light transmission under illuminant A ($T_{LA}$) of at least 70% for a thickness of 3.85 mm.

**Patentansprüche**

**1.** Glaszusammensetzung vom Typ Kalk-Natron-Silikat, die insbesondere für die Herstellung einer Verglasung bestimmt ist, umfassend die nachstehenden Bestandteile innerhalb der folgenden Gewichtsgrenzen:

| | |
|---|---|
| $SiO_2$ | 64 - 75 % |
| $Al_2O_3$ | 0 - 5 % |
| $B_2O_3$ | 0 - 5 % |
| CaO | 5 - 15% |
| MgO | 0 - 5% |
| $Na_2O$ | 10 - 18 % |

(fortgesetzt)

| K$_2$O | 0-5% |
|---|---|

und die nachstehenden Farbstoffe innerhalb der folgenden Gewichtsgrenzen:

| Fe$_2$O$_3$ (Gesamteisen) | 0,2 - 0,3 % |
|---|---|
| Se | 2 - 8 ppm |
| CoO | 0 - 20 ppm |
| NiO | 0 - 5 ppm |

wobei die Stoffe die folgende Beziehung erfüllen:

$$0,7 < (200 \times NiO) + (5000 \times Se) + (6 \times Fe^{3+}) / (875 \times CoO) + (24 \times Fe2^{+}) < 1,6$$

worin die Gehalte an NiO, Se, Fe$^{3+}$, CoO und Fe$^{2+}$ in ppm ausgedrückt sind, wobei Fe$^{3+}$ der in Form von Fe$_2$O$_3$ ausgedrückte Eisen(III)-Gehalt ist und Fe$^{2+}$ der in Form von FeO ausgedrückte Eisen(II)-Gehalt ist, und wobei die Zusammensetzung einen Redox von über 0,4 und von unter oder gleich 0,5, eine Gesamtlichtdurchlässigkeit unter Lichtart A (T$_{LA}$) von über 65 %, eine Selektivität (SE) von über 1,25, gemessen für eine Dicke von 3,85 mm, aufweist, **dadurch gekennzeichnet, dass** sie einen spektralen Farbanteil von unter oder gleich 2 % aufweist.

2. Zusammensetzung nach Anspruch 1, **dadurch gekennzeichnet, dass** sie einen Redox von über 0,45 aufweist.

3. Zusammensetzung nach Anspruch 1 oder 2, **dadurch gekennzeichnet, dass** sie einen spektralen Farbanteil von unter 1 % aufweist.

4. Glaszusammensetzung nach einem der Ansprüche 1 bis 3, **dadurch gekennzeichnet, dass** sie NiO-frei ist und umfasst

| Fe$_2$O$_3$ (Gesamteisen) | 0,2 - 0,25 % |
|---|---|
| Se | 4 - 7ppm |
| CoO | 10 - 20 ppm. |

5. Glaszusammensetzung vom Typ Kalk-Natron-Silikat, die insbesondere für die Herstellung einer Verglasung bestimmt ist, umfassend die nachstehenden Bestandteile innerhalb der folgenden Gewichtsgrenzen:

| SiO$_2$ | 64 - 75% |
|---|---|
| Al$_2$O$_3$ | 0 - 5 % |
| B$_2$O$_3$ | 0 - 5 % |
| CaO | 5 - 15% |
| MgO | 0 - 5 % |
| Na$_2$O | 10 - 18% |
| K$_2$O | 0 - 5 % |

und die nachstehenden Farbstoffe innerhalb der folgenden Gewichtsgrenzen:

| Fe$_2$O$_3$ (Gesamteisen) | 0,35 - 0,45 % |
|---|---|
| Se | 2 - 8 ppm |
| CoO | 0 - 10 ppm |
| NiO | 0 - 80 ppm |

wobei die Stoffe die folgende Beziehung erfüllen:

$$0,7 < (200 \times NiO) + (5000 \times Se) + (6 \times Fe^{3+}) / (875 \times CoO) + (24 \times Fe^{2+}) < 1,6$$

worin die Gehalte an NiO, Se, $Fe^{3+}$, CoO und $Fe^{2+}$ in ppm ausgedrückt sind, wobei $Fe^{3+}$ der in Form von $Fe_2O_3$ ausgedrückte Eisen(III)-Gehalt ist und $Fe^{2+}$ der in Form von FeO ausgedrückte Eisen(II)-Gehalt ist,

und wobei die Zusammensetzung einen Redox von über oder gleich 0,34 und von unter oder gleich 0,5, eine Gesamtlichtdurchlässigkeit unter Lichtart A ($T_{LA)}$) von über 65 %, eine Selektivität (SE) von über 1,25, gemessen für eine Dicke von 3,85 mm, aufweist, **dadurch gekennzeichnet, dass** sie einen spektralen Farbanteil von unter oder gleich 2 % aufweist,

mit Ausnahme der Glaszusammensetzung, die die folgende Glasmatrix aufweist, deren Gehalte in Gewichtsprozenten ausgedrückt sind:

| | |
|---|---|
| $SiO_2$ | 71,00 % |
| $Al_2O_3$ | 0,70 % |
| CaO | 8,90 % |
| MgO | 3,80 % |
| $Na_2O$ | 14,10 % |
| $K_2O$ | 0,10 % |

sowie die nachstehenden Farbstoffe:

| | |
|---|---|
| $Fe_2O_3$ (Gesamteisen) | 0,45 % |
| FeO | 0,16% |
| CoO | 10 ppm |
| NiO | 50 ppm |
| Se | 5 ppm |

wobei die ausgenommene Zusammensetzung einen korrigierten Gehalt an Siliziumdioxid $SiO_2$, um sich dem Gesamtgehalt an zugegebenen Farbstoffen anzupassen, folgende Temperaturen $T(log\eta=2)$ und $T(log\eta=3,5)$, die den in Poise ausgedrückten Viskositäten, wie $log\eta=2$ bzw. $log\eta=3,5$ entsprechen, sowie die folgende Liquidustemperatur $T_{liq}$ aufweist:

| | |
|---|---|
| $T(log\eta=2)$ | 1410 °C |
| $T(log\eta=3,5)$ | 1100 °C |
| $T_{liq}$ | 1060 °C |

und wobei die ausgenommene Zusammensetzung ferner einen Gesamtlichtdurchlassgrad unter Lichtart A ($T_{LA}$) zwischen 380 und 780 nm von gleich 69,0 %, einen Gesamtenergiedurchlassgrad ($T_E$) im Bereich zwischen 295 und 2500 nm nach der ISO-Norm 9050 (Parry Moon Luftmasse 2) von gleich 49,2 %, einen nach der ISO-Norm 9050 berechneten Durchlassgrad der UV-Sonnenstrahlung ($T_{UV}$) von gleich 30,1 %, eine farbtongleiche Wellenlänge ($\lambda$f) unter Lichtart D65 von gleich 517 nm und einen spektralen Farbanteil ($P_{D65}$) unter Lichtart D65 von gleich 1,2 %, gemessen für eine Dicke von 3,85 mm, aufweist.

6. Zusammensetzung nach Anspruch 1 oder 5, **dadurch gekennzeichnet, dass** sie eine Selektivität von über 1,3 aufweist.

7. Zusammensetzung nach Anspruch 5 oder 6, **dadurch gekennzeichnet, dass** sie umfasst:

| | |
|---|---|
| $Fe_2O_3$ (Gesamteisen) | 0,39 - 0,45 % |
| Se | 3 - 6 ppm |
| CoO | 0 - 6 ppm |
| NiO | 0 - 15 ppm. |

8. Zusammensetzung nach Anspruch 1 oder 5, **dadurch gekennzeichnet, dass** sie einen Farbwiedergabeindex (Ra) von wenigstens gleich 94 und vorzugsweise von über 96 aufweist.

9. Zusammensetzung nach einem der Ansprüche 1 bis 8, **dadurch gekennzeichnet, dass** sie ferner wenigstens ein optisches Absorptionsmittel umfasst, das aus $CeO_2$, $TiO_2$, $V_2O_5$, $WO_3$, $La_2O_3$ ausgewählt ist.

10. Zusammensetzung nach Anspruch 9, **dadurch gekennzeichnet, dass** der Gesamtgehalt an Mittel(n) unter 1 Gew.-% liegt.

11. Verglasung, **dadurch gekennzeichnet, dass** sie wenigstens eine Glasscheibe umfasst, deren chemische Zusammensetzung durch einen der Ansprüche 1 bis 10 definiert ist.

12. Verglasung nach Anspruch 11, **dadurch gekennzeichnet, dass** die Scheibe eine zwischen 0,8 und 10 mm variierende Dicke aufweist.

13. Verglasung nach Anspruch 12, d**adurch gekennzeichnet**, dass die Scheibe eine Gesamtlichtdurchlässigkeit unter Lichtart A ($T_{LA}$) von wenigstens gleich 70 % bei einer Dicke von 3,85 mm aufweist.

**EP 1 487 752 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 9604212 A
- EP 0653386 A
- EP 0677492 A
- FR 2738239 A
- WO 0076928 A
- WO 03004427 A